# EUROPEAN PATENT SPECIFICATION

(11) **EP 2 354 700 B1**
(45) Date of publication and mention of the grant of the patent: **21.03.2012**
(21) Application number: 10382014.8
(22) Date of filing: 25.01.2010
(51) Int. Cl.: F24H 1/18

(54) **Tank for storing pressure water**
Speicher für Wasser unter Druck
Accumulateur pour eau sous pression

(43) Date of publication of application: 10.08.2011
(73) Proprietor: Soterna, S. Coop., 31250 Oteiza (ES)
(72) Inventor: Juaristi Vaquero, Asier, 31180 Zizur Mayor (ES)
(74) Representative: Igartua, Ismael

(56) References cited:
- WO-A1-97/45250
- US-A- 5 927 537

## Description

### TECHNICAL FIELD

This invention relates to tanks for storing water, and more specifically to tanks for storing pressure water, such as hot sanitary water.

### PRIOR ART

Systems and/or installations comprising tanks for storing pressure water for its subsequent use, such as for storing pressure water, which is subsequently used for domestic purposes, for example, are known in the prior art. Thanks to said storage, when a user turns on a tap or a shower to obtain hot water the water is hot immediately without the user having to wait until it is heated by means of a heater, for example. Such tanks can also be used to supply hot water to the heating system of a house for example. The water is generally heated by solar power systems (with the tanks forming part of a solar panel for example), though it can also be heated by heaters or equivalent means if necessary.

The tanks are generally made of stainless steel, and as the water is under pressure, it is desirable that the shape of the tank is such that there are no flat surfaces, as this would create the risk of the pressure exerted by said water being focused on a specific point, causing the tank to break or even to explode, for example. As a result, known solutions present a cylindrical tank, the diameter of which depends on the capacity given to the tank, which can pose a problem in the storage of large amounts of water due to the size it can occupy for example. These cylindrical tanks are not strong enough to withstand the pressure of the water stored inside them.

Document US4637375 discloses a tank for the storage of pressure water. This tank is cylindrical and comprises an intake through which pressure water enters it, and an outlet through which hot pressure water is evacuated from its interior for its distribution.

Document WO 97745250 A1 discloses a tank for storing pressure water; according to the preamble of claim 1, comprising essentially a tank body formed by a plurality of substantially hollow and substantially tubular segments, the pressure water being stored inside said tubular segments. The tubular segments are joined each other by means of connecting walls that extend longitudinally and which comprise an opening through which the pressure water travels from one tubular segment to another.

### DISCLOSURE OF THE INVENTION

It is an object of this invention to provide a tank for storing pressure water, as described in the claims.

The tank for storing pressure water of the invention comprises a tank body in which the pressure water is stored, an intake through which pressure water enters it, and an outlet through which the pressure water is evacuated for its use. Said tank also comprises a plurality of substantially hollow tubular segments, which are disposed adjacent to each other and joined to each other, and which form the tank body, the pressure water being stored inside it.

Hence, thanks to the tubular segments, a tank with the capacity to storage a large amount of water is created without it being of a size that prevents its use or installation in certain locations, such as in the walls of a house as a partition wall or in the roofs of houses, for example. Thanks to the tank of the invention, therefore, larger amounts of water can be stored in a simple way.

These and other advantages and characteristics of the invention will be made evident in the light of the drawings and the detailed description thereof.

### DESCRIPTION OF THE DRAWINGS

Figure 1 shows a view in perspective of a first embodiment of the tank of the invention.
Figure 2 shows a view in perspective of a tank body of the tank of Figure 1.
Figure 3a shows a view in perspective of a cover of a storage module of the tank of Figure 1, in which the through-holes of said cover are shown.
Figure 3b shows a view in perspective of a cover of a storage module of the tank of Figure 1, in which the intake or the outlet of said cover is shown.
Figure 3c shows a view in perspective of a cover of a storage module of the tank of Figure 1, in which the connection means of said cover are shown.
Figure 4 shows a view in perspective of a second embodiment of the tank of the invention.

### DETAILED DISCLOSURE OF THE INVENTION

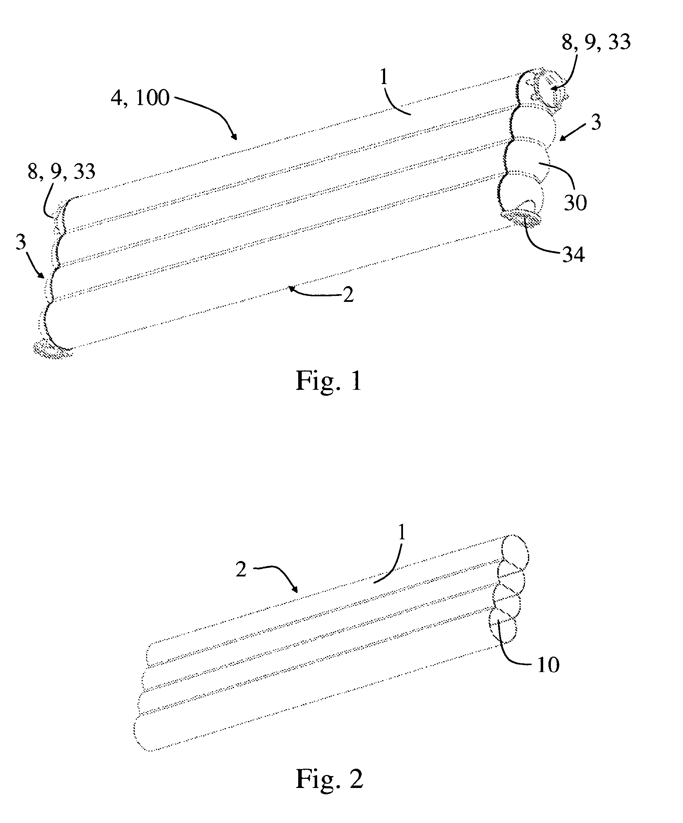

Figure 1 shows a first embodiment of the inventive tank 100 for storing pressure water for its subsequent use. Said tank 100 comprises a tank body 2 in which the pressure water is stored, an intake 8 through which pressure water enters said tank 100, and an outlet 9 through which the pressure water of said tank 100, which has been heated, is evacuated for its supply. The tank body 2 is formed by a plurality of substantially hollow and substantially tubular segments 1, preferably four, which are disposed adjacent to each other and joined to each other, the pressure water being stored inside said tubular segments 1. As they comprise a substantially tubular shape, the tubular segments 1 withstand the pressure exerted by the pressure water that stores inside it. Figure 2 shows a preferred embodiment of a tank body 2, which comprises four tubular segments 1 and which corresponds with the tank body 2 of the first embodiment of the tank 100.

The tubular segments 1 are joined by means of connecting walls 10, said connecting walls 10 insulating the inside of two adjacent tubular segments 1 one from the other, the tubular segments 1 not being directly communicated to each other. Said tubular segments 1 are open on both sides and the tank 100 comprises at least one cover 3 on each side of the tank body 2 in order to close said tank body 2 on both sides, the tank body 2 and said covers 3 forming a storage module 4 that corresponds with the tank 100 in the first embodiment of the invention. Thus, in said first embodiment the tank 100 comprises two covers 3 and a substantially rectangular shape.

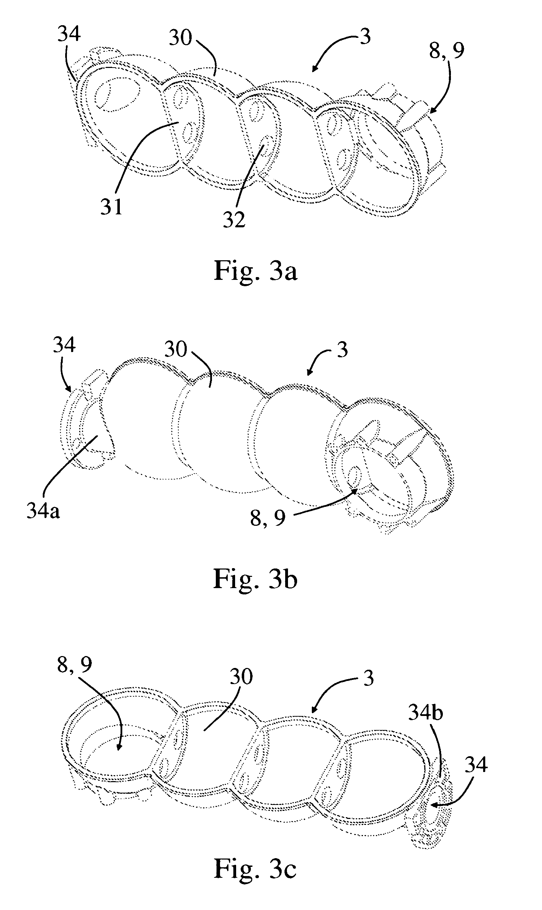

Preferably, as shown in the embodiment of figures 3a, 3b and 3c, each cover 3 comprises a substantially semi-spherical section 30 in order to cover one end of each tubular segment 1, and a wall 31 in its interior to separate a semi-spherical section 30 from the adjacent semi-spherical section 30, although it can also be the case that each cover is a semi-spherical section 30 and covers a single tubular segment 1. As they comprise a substantially semi-spherical shape, the covers 3 withstand the pressure exerted by the pressure water. As stated above, the tank 100 comprises an intake 8 and an outlet 9 for the pressure water, so that each cover 3 of the first embodiment of the invention comprises an opening 33 in a semi-spherical section 30 corresponding to one of the corresponding tubular segments 1, one of said openings 33 corresponding with the intake 8, the other opening 33 corresponding with the outlet 9. In addition, in said first embodiment, the covers 3 are disposed asymmetrically, so that the two openings 33 do not coincide for the same tubular segment 1, and the passage and/or storage of the water in all the tubular segments 1 that make up the tank 100 is allowed. To achieve this, a union is also necessary between the tubular segments 1 (its interior) that make up said tank, and said union is formed through the covers 3. Said covers 3 comprise at least one through-hole 32 in the wall 31, preferably two through-holes 32, so that the pressure water, once it has entered the tank 100, can pass from one tubular segment 1 to another through said through-holes 32. Therefore, the pressure water can circulate inside the tank 100 in such a way that it can be heated effectively, and enables a user to be provided with hot water whenever they require.

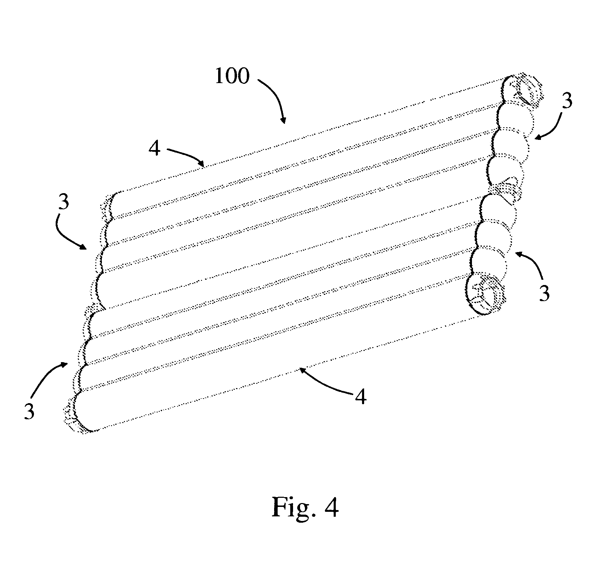

In a second embodiment shown in Figure 4, the tank 100 comprises two storage modules 4 connected to each other, although a tank 100 could also comprise more storage modules 4, as a means for increasing the capacity for storing pressure water for example. The storage modules 4 are joined together by the covers 3, and for this purpose each cover 3 comprises connection means 34 disposed in a semi-spherical section 30 that closes an external tubular segment 1 of the corresponding storage module 4, so that it can be joined with another cover 3 corresponding to another storage module 4. Preferably, the connection means 34 comprise an axial hollow extension 34a that extends from said semi-spherical section 30, and a wall 34b on the end of said hollow extension 34a, as shown in figures 3b and 3c. In order to join two storage modules 4, the walls 34b of two covers 3 of said storage modules 4 face each other and cooperate with each other in order to complete said union, which is made by joining said walls 34b using connection means such as screws, for example. Both storage modules 4 are joined to each other by the corresponding hollow extensions 34a, the pressure water passing from one storage module 4 to another through said corresponding hollow extensions 34a. To prevent water leaking between both walls 34b an insulating element can be disposed, such as a ring seal. In the second embodiment shown in Figure 4, the covers 3 of both storage modules are equal, each cover 3 comprising connection means 34 and an opening 33, and the connection means 34 being disposed in a semi-spherical section 30 opposite the semi-spherical section 30 where the opening 33 is disposed. Each storage module 4 thus comprises two openings 33, and one of them is closed or covered, so that each storage module 4 keeps only one opening 33 in order to communicate with the outside, one of said openings 33 corresponding with the intake 8 and the other with the outlet 9 of the tank 100. The openings 33 that remain open (communicated to the outside of the tank) are disposed asymmetrically in the tank 100, so that the passage and/or storage of water in all the tubular segments 1 that make up said tank 100 is improved and/or allowed. Instead of all the covers 3 having one opening 33, it is also possible to dispose only two covers 3 with said openings 33 and another two covers without said openings 33. In the event that a tank 100 comprises more than two storage modules 4, the intermediate storage modules 4 do not comprise openings 33 and comprise two opposite connection means 34 for their connection to two storage modules 4 (one on each side).

Preferably, the covers 3 and the tubular segments 1 are manufactured from the same material, so that they can be joined together easily by welding and the leakage of water in the connections is prevented. Naturally, other types of connections can also be used, although the connections have to be insulated to prevent water from escaping or leaking. The material used is also a thermoplastic material, which can be moulded to provide the shape of the tubular segments 1 and of the semi-spherical sections 30 of the covers 3, which support high temperatures without becoming deformed, and which support pressure such as that exerted by hot sanitary water. Preferably, the material used is PPSU.

These types of tanks 100 can be used in different installations, such as solar panel installations or even in installations where the tank 100 can be disposed in a house or an office. Thanks to its tubular and rectangular shape, it is possible to fit it in the wall of a house, as a partition wall for example, without it using up much space in the house and/or affecting aesthetic continuity. In this particular case, the tank 100 is covered with a conventional insulating material, the idea being to prevent the pressure water stored inside it from losing heat and negatively impacting on the room of the house by heating up in summer, for example.

## Claims

1. Tank for storing pressure water, which comprises a tank body (2) in which the pressure water is stored, an intake (8) through which water enters the tank (100), and an outlet (9) through which the pressure water is evacuated from said tank (100) for its use, the tank body (2) being formed by a plurality of substantially hollow and substantially tubular segments (1), which are disposed adjacent to each other and joined to each other and which are open on both sides, said tank (100) having a substantially rectangular shape, and the pressure water being stored inside said tubular segments (1), two tubular segments (1) being joined to each other by means of a connecting wall (10) that extend longitudinally and the tank (100) comprising at least one cover (3) on each side of the tank body (2) in order to close said tank body (2), said covers (3) closing the tubular segments (1) of said tank body (2), said tank body (2) and said covers (3) forming a storage module (4), **characterised in that** the connecting walls (10) prevent a direct connection between the inside of two adjacent tubular segments (1), said tubular segments (1) being communicated to each other through the covers (3), each cover (3) comprising a substantially semi-spherical section (30) in order to cover one end of each tubular segment (1), and a wall (31) in its interior to separate one semi-spherical section (30) from the adjacent semi-spherical section (30), said wall (31) comprising at least one through-hole (32) through which two adjacent tubular segments (1) are communicated.

2. Tank according to claim 1, wherein the wall (31) comprises two through-holes (32).

3. Tank according to any of claims 1 to 2, comprising at least two storage modules (4) joined to each other.

4. Tank according to claim 3, wherein the storage modules (4) are joined to each other by means of the covers (3), each cover (3) comprising connection means (34) disposed in a semi-spherical section (30) that closes an external tubular segment (1) of the corresponding storage module (4), so that it can be joined to another cover (3) of another storage module (4).

5. Tank according to claim 4, wherein the connection means (34) comprise an axial hollow extension (34a) and a wall (34b) on the end of said hollow extension (34a), two walls (34b) of two adjacent covers (2) cooperating with each other in order to join two storage modules (4) to each other, both storage modules (4) being joined through the corresponding hollow extensions (34a).

6. Tank according to any of claims 1 to 5, wherein the covers (3) and tubular segments (1) are manufactured from the same material.

7. Tank according to claim 6, wherein the material of the covers (3) and the tubular segments (1) is a thermoplastic material.

8. Tank according to claim 7, wherein the thermoplastic material is PPSU.

9. Installation for storing pressure water,
**characterised in that**
it comprises at least one tank (100) according to any of the preceding claims.

10. Installation according to claim 9, wherein the tank (100) is covered with an insulating material.

## Patentansprüche

1. Tank zum Speichern von Druckwasser, umfassend einen Tankkörper (2), in dem das Druckwasser gespeichert wird, einen Einlauf (8), durch den das Wasser in den Tank (100) eindringt, und einen Auslauf (9), durch den das Druckwasser aus dem Tank (100) zur Verwendung desselben abgelassen wird, wobei der Tankkörper (2) aus einer Vielzahl von im Wesentlichen hohlen und im Wesentlichen röhrenförmigen Segmenten (1) gebildet ist, die nebeneinander angeordnet sind und zusammengefügt sind und die auf beiden Seiten offen sind, wobei der Tank (100) eine im Wesentlichen rechteckige Form aufweist, und wobei das Druckwasser im Innern der röhrenförmigen Segmente (1) gespeichert ist, wobei zwei röhrenförmige Segmente (1) anhand einer Verbindungswand (10), die sich längsseitig erstreckt, zusammengefügt sind, und wobei der Tank (100) mindestens einen Deckel (3) auf jeder Seite des Tankkörpers (2) umfasst, um den Tankkörper (2) zu schließen, wobei die Deckel (3) die röhrenförmigen Segmente (1) des Tankkörpers (2) schließen, wobei der Tankkörper (2) und die Deckel (3) ein Speichermodul (4) bilden, **dadurch gekennzeichnet, dass** die Verbindungswände (10) eine direkte Verbindung zwischen dem Innern der beiden angrenzenden röhrenförmigen Segmente (1) verhindern, wobei die röhrenförmigen Segmente (1) durch die Deckel (3) miteinander in Verbindung stehen, wobei jeder Deckel (3) einen im Wesentlichen halbkugelförmigen Abschnitt (30) umfasst, um ein Ende jedes röhrenförmigen Segments (1) abzudecken, und eine Wand (31) in seinem Innern umfasst, um einen halbkugelförmigen Abschnitt (30) von dem angrenzenden halbkugelförmigen Abschnitt (30) zu trennen, wobei die Wand (31) mindestens ein Durchgangsloch (32) umfasst, durch das die beiden angrenzenden Rohrsegmente (1) in Verbindung stehen.

2. Tank nach Anspruch 1, wobei die Wand (31) zwei Durchgangslöcher (32) umfasst.

3. Tank nach einem der Ansprüche 1 bis 2, umfassend mindestens zwei zusammengefügte Speichermodule (4).

4. Tank nach Anspruch 3, wobei die Speichermodule (4) anhand der Deckel (3) zusammengefügt sind, wobei jeder Deckel (3) Verbindungsmittel (34) umfasst, die in einem halbkugelförmigen Abschnitt (30) angeordnet sind, der ein externes röhrenförmiges Segment (1) des entsprechenden Speichermoduls (4) schließt, so dass er mit einem anderen Deckel (3) eines anderen Speichermoduls (4) zusammengefügt werden kann.

5. Tank nach Anspruch 4, wobei die Verbindungsmittel (34) eine axiale hohle Verlängerung (34a) und eine Wand (34b) am Ende der hohlen Verlängerung (34a) umfassen, wobei die beiden Wände (34b) von zwei angrenzenden Deckeln (2) zusammenwirken, um die beiden Speichermodule (4) zusammenzufügen, wobei die beiden Speichermodule (4) durch die entsprechenden hohlen Verlängerungen (34a) zusammengefügt sind.

6. Tank nach einem der Ansprüche 1 bis 5, wobei die Deckel (3) und die röhrenförmigen Segmente (1) aus dem gleichen Material hergestellt sind.

7. Tank nach Anspruch 6, wobei das Material der Deckel (3) und der röhrenförmigen Segmente (1) ein thermoplastisches Material ist.

8. Tank nach Anspruch 7, wobei das thermoplastische Material PPSU ist.

9. Anlage zum Speichern von Druckwasser, **dadurch gekennzeichnet, dass** sie mindestens einen Tank (100) nach einem der vorhergehenden Ansprüche umfasst.

10. Anlage nach Anspruch 9, wobei der Tank (100) mit einem Isoliermaterial ummantelt ist.

## Revendications

1. Réservoir pour stocker de l'eau sous pression, comprenant un corps de réservoir (2) dans lequel est stockée l'eau sous pression, une entrée (8) par laquelle l'eau entre dans le réservoir (100) et une sortie (9) par laquelle l'eau sous pression est évacuée dudit réservoir (100) en vue de son utilisation, le corps de réservoir (2) étant formé par une pluralité de segments (1) substantiellement creux et substantiellement tubulaires qui sont disposés côte à côte et reliés ensemble et qui sont ouverts des deux côtés, ledit réservoir (100) présentant une forme substantiellement rectangulaire, et l'eau sous pression étant stockée à l'intérieur desdits segments tubulaires (1), deux segments tubulaires (1) étant reliés ensemble au moyen d'une paroi de connexion (10) qui s'étend dans le sens de la longueur, et le réservoir (100) comprenant au moins un couvercle (3) de chaque côté du corps de réservoir (2) afin de fermer ledit corps de réservoir (2), lesdits couvercles (3) fermant les segments tubulaires (1) dudit corps de réservoir (2), ledit corps de réservoir (2) et lesdits couvercles (3) formant un module de stockage (4), **caractérisé en ce que** les parois de connexion (10) empêchent une connexion directe entre l'intérieur de deux segments tubulaires (1) adjacents, lesdits segments tubulaires (1) communiquant l'un avec l'autre à travers les couvercles (3), chaque couvercle (3) comprenant une section (30) substantiellement hémisphérique afin de couvrir une extrémité de chaque segment tubulaire (1), et une paroi (31) en son intérieur pour séparer une section hémisphérique (30) de la section hémisphérique adjacente (30), ladite paroi (31) comprenant au moins un trou traversant (32) à travers lequel communiquent deux segments tubulaires (1) adjacents.

2. Réservoir selon la revendication 1, dans lequel la paroi (31) comprend deux trous traversants (32).

3. Réservoir selon l'une quelconque des revendications 1 à 2, comprenant au moins deux modules de stockage (4) reliés ensemble.

4. Réservoir selon la revendication 3, dans lequel les modules de stockage (4) sont reliés ensemble au moyen des couvercles (3), chaque couvercle (3) comprenant des moyens de connexion (34) disposés dans une section hémisphérique (30) qui ferme un segment tubulaire externe (1) du module de stockage (4) correspondant, de sorte qu'il peut être relié à un autre couvercle (3) d'un autre module de stockage (4).

5. Réservoir selon la revendication 4, dans lequel les moyens de connexion (34) comprennent un embout creux (34a) et une paroi (34b) à l'extrémité dudit embout creux (34a), deux parois (34b) de deux couvercles adjacents (2) coopérant l'une avec l'autre afin de relier ensemble les deux modules de stockage (4), les deux modules de stockage (4) étant reliés à travers les embouts creux (34a) correspondants.

6. Réservoir selon l'une quelconque des revendications 1 à 5, dans lequel les couvercles (3) et les segments tubulaires (1) sont fabriqués à partir du même matériau.

7. Réservoir selon la revendication 6, dans lequel le matériau des couvercles (3) et des segments tubulaires (1) est un matériau thermoplastique.

8. Réservoir selon la revendication 7, dans lequel le matériau thermoplastique est le PPSU.

9. Installation pour stocker de l'eau sous pression, **caractérisée en ce qu'**elle comprend au moins un réservoir (100) selon l'une quelconque des revendications précédentes.

10. Installation selon la revendication 9, dans laquelle le réservoir (100) est recouvert d'un matériau isolant.
